(19) Europäisches Patentamt
European Patent Office
Office européen des brevets

(11) Numéro de publication: 0 184 951
B1

# (12) FASCICULE DE BREVET EUROPÉEN

(45) Date de publication du fascicule du brevet: **10.08.88**

(51) Int. Cl.⁴: **H 01 B 3/12**

(21) Numéro de dépôt: **85402155.7**

(22) Date de dépôt: **07.11.85**

(54) **Composés azotés ou oxyazotés à structure pérovskite, leur préparation et leur application à la fabrication de composants diélectriques.**

(30) Priorité: **13.11.84 FR 8417274**

(43) Date de publication de la demande: **18.06.86 Bulletin 86/25**

(45) Mention de la délivrance du brevet: **10.08.88 Bulletin 88/32**

(84) Etats contractants désignés: **AT DE FR GB IT NL SE**

(56) Documents cité:
**CHEMICAL ABSTRACTS, vol. 88, no. 16, 17 avril 1978, pages 585-586, no. 113912j, Columbus, Ohio, US; J.S. THORP et al.: "The d.c. electric properties of hot-pressed nitrogen ceramics"**

(73) Titulaire: **CENTRE NATIONAL DE LA RECHERCHE SCIENTIFIQUE (CNRS), 15, Quai Anatole France, F-75700 Paris Cedex 07 (FR)**

(72) Inventeur: **Marchand, Roger, 38, rue de la Coulée, F-35510 Cesson Sevigne (FR)**
Inventeur: **Laurent, Yves, Les Landes de Billé Thorigné Fouillard, F-35510 Cesson Sevigne (FR)**

(74) Mandataire: **Ahner, Francis, CABINET REGIMBEAU 26, avenue Kléber, F-75116 Paris (FR)**

**EP 0 184 951 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne de nouveaux composes azotés ou oxyazotés présentant une structure perovskite, leur préparation et leur application à la fabrication de composants diélectriques.

Les composants électroniques passifs sont généralement fabriqués à l'aide d'oxydes. C'est ainsi que, l'un des matériaux diélectriques les plus connus et les plus utilisés dans la fabrication de condensateurs céramiques est le titanate de baryum ($BaTiO_3$) qui possède une structure perovskite. Il a également déjà été proposé de substituer, partiellement ou totalement, le baryum par du strontium ou du piomb, et le titane par du zirconium, ce qui influence en particulier la température de transition entre les domaines ferro- et paraélectriques.

La mise en forme d'un tel matériau sous forme de céramique nécessite un frittage qui doit être réalisé à haute température. Il est en outre nécessaire d'opérer sous atmosphère d'oxygène, afin d'éviter des défauts de stoechiométrie préjudiciabies aux qualités diélectriques de a céramique.

Le fait de travailler à température élevée (de l'ordre de 1200° C) et sous oxygène limite considérablement le nombre de métaux que l'on peut utiliser dans les condensateurs multicouches. Le platine convient par exemple, mais son prix de revient élevé est dissuasif au stade de la fabrication industrielle. L'emploi d'additifs, tels que $Bi_2O_3$, $CaF_2$ ou LiF, permet de diminuer la température de frittage et d'utiliser ainsi des alliages, tels que les mixtes platine-paliadium ou palladium-argent, qui restent cependant encore trop onéreux.

La présente invention a eu pour but d'obtenir des matériaux diélectriques azotés ou oxyazotés qui, pour leur frittage, ne nécessitent non plus une atmosphère d'oxygène, mais une atmosphère neutre, par exemple d'azote. Il devient ainsi possible d'utiliser des métaux ou alliages moins nobles. Les composés nitrurés qui sont stables sous atmosphère d'azote ou d'ammoniac remplissent parfaitement cette condition.

L'introduction d'azote dans le réseau anionique d'un oxyde provoque une augmentation de charge négative qui nécessite parallèlement dans le réseau cationique le remplacement d'un élément de degré d'oxydation donné par un autre de degré d'oxydation plus élevé.

Ainsi, si l'on considère le titanate de baryum $BaTiO_3$, la substitution d'une partie de l'oxygène par de l'azote doit s'accompagner de façon concomittante du remplacement de Ba par un élément trivalent, ou du Ti par un élément de degré d'oxydation V. Ces substitutions peuvent être simultanées ou séparées. D'autres possibilités de substitutions intermédiaires ont en outre été envisagées. En effet, le réseau anionique d'une perovskite $ABX_3$ est formé par trois atomes. Si ceux-ci sont constitués par trois atomes d'oxygène, par exemple $BaTiO_3$, la charge anionique est égale à -6. La substitution totale de l'oxygène par de l'azote conduit à la charge de -9. La compensation dans le réseau cationique est assurée par des cations qui doivent en outre posséder des rayons ioniques compatibles avec la coordinence des sites A et B de la structure perovskite.

On rappellera ici brièvement que les composés à structure perovskite répondent à la formule générale A B $X_3$, A et B désignant des cations et X des anions. Les perovskites idéales cristallisent dans le système cubique (groupe spatial Pm3m). Dans le cas du composé $SrTiO_3$ par exemple, la structure est constituée par un arrangement tridimensionnel d'octaèdres $TiO_6$ dont les sommets sont communs à deux octaèdres, d'où la stoechiométrie $TiO_3$. Cet arrangement d'octaèdres fait apparaître au centre du cube un site à coordinence 12 qui est occupé par le cation de type B, le strontium dans ce cas particulier.

De façon générale, l'obtention de ce type structural nécessite, pour un composé de formule A B $X_3$, de remplir les deux conditions suivantes:

1) <u>Condition géométrique</u>

Les rayons ioniques sont liés par la relation suivante:

$$ra + rX = (rB + rX)\sqrt{2} \times t$$

t étant un facteur de tolérance voisin de 1.

2) <u>Condition électrostatique</u>

La somme des charges cationiques doit toujours être égale à la somme des charges anioniques. Dans le cas d'une perovskite purement oxygénée, on doit donc avoir A + B = 6+.

La substitution de l'oxygène par de l'azote entraîne une augmentation de la charge anionique qu'il est nécessaire de compenser dans le réseau cationique.

Les composés azotés ou oxyazotés à structure perovskite, objet de la présente invention, répondent à la formule générale I:

$$A\ B\ O_{3-n}\ N_n \qquad (I)$$

dans laquelle:

le réseau cationique est constitué:

* par un cation de métal A choisi parmi: $Li^+$, $Na^+$, $K^+$, $Rb^+$, $Cs^+$, $Ag^+$, $Tl^+$, $Ca^{2+}$ $Ba^{2+}$, $Sr^{2+}$, $Pb^{2+}$, $Cd^{2+}$, $Ln^{3+}$. $Bi^{3+}$, $Y^{3+}$, $Th^{3+}$, $U^{4+}$, trans-$U^{4+}$; et
* par un cation de métal B choisi parmi: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$;
* n = 1, 2 ou 3,
* étant en outre entendu que, d'une part le rapport atomique A/B peut varier légèrement de part et d'autre de la valeur idéale 1 et, d'autre part le réseau anionique peut être légèrement déficitaire,
* les charges cationiques <u>a</u> du métal A et <u>b</u> du métal B vérifient les relations:

$a + b = 6 + n$
$a \geqslant n$

Selon une caractéristique particulière de la présente invention, les composés oxyazotés répondent à la formule générale Ia:

$A\,B\,O_2\,N$ (Ia)

dans laquelle:
* le cation de métal A est choisi parmi: $Li^+$, $Na^+$, $K^+$, $Rb^+$, $Cs^+$, $Ag^+$, $Tl^+$, $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$; et
* le cation de métal B est choisi parmi: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$.

Selon une caractéristique particulière de la présente invention, les composés oxyazotés répondent à la formule générale Ib:

$A\,B\,O\,N_2$ (Ib)

dans laquelle:
* le cation de métal A est choisi parmi: $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$. $U^{4+}$, trans-$U^{4+}$;
et
* le cation de métal B est choisi parmi: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$.

Selon une autre caractéristique particulère de la présente invention, les composés azotés répondent à la formule générale Ic:

$A\,B\,N_3$ (Ic)

dans laquelle:
* le cation de métal A est choisi parmi: $Ln^{3+}$, $Bi^{3+}$, $Y^{3+}$, $Th^{4+}$, $U^{4+}$, trans-$U^{4+}$, et
* le cation de métal B est choisi parmi: $W^{6+}$, $Re^{6+}$, $Mo^{6+}$, $Ta^{5+}$, $Nb^{5+}$, $Mo^{5+}$, $W^{5+}$.

Dans la définition des cations des métaux A et B, respectivement, le symbole Ln désigne à la fois le lanthane (La) ainsi que l'ensemble des lanthanides, et le symbole trans-U désigne les transuranides, en particulier le neptunium (Np) et le plutonium (Pu).

La présente invention se rapporte également au procédé de préparation des composés de formule générale I. Conformément à une première variante, ces composés sont obtenus par introduction de l'azote sous forme de nitrure ou d'oxynitrure dans un mélange réactionnel solide. Conformément à cette variante, on fait réagir un nitrure, un oxynitrure ou un oxyde de métal A avec un nitrure, un oxynitrure ou un oxyde de métal B.

Conformément à une seconde variante du procédé de l'invention, on effectue la nitruration, sous une atmosphère gazeuse réductrice, d'un mélange constitué par un oxyde ou un précurseur d'oxyde de métal A et par un oxyde ou un précurseur d'oxyde de métal B. Une telle réaction de nitruration est conduite pendant environ 48 heures à une température de l'ordre de 900 à 1000° C. Dans la pratique, on utilise de façon avantageuse l'ammoniac en tant qu'agent de nitruration et de réduction. On précisera enfin que, dans le cas d'un métal A de type alcalino-terreux, le précurseur d'oxyde de métal A sera généralement choisi de façon avantageuse parmi le carbonate et l'oxalate.

Conformément à une troisième variante du procédé de l'invention, on effectue la nitruration, sous une atmosphère gazeuse réductrice, dans la pratique sous ammoniac, d'un oxyde mixte des métaux A et B (ou d'un mélange d'oxydes mixtes) issu de la combinaison préalable des constituants du mélange de la seconde variante.

L'invention sera décrite ci-après plus en détail en se référant à quelques exemples de mise en oeuvre particuliers du procédé de l'invention, indiqués à titre de simple illustration.

**Exemple 1**

Préparation de $BaTaO_2N$ à partir d'un dérivé nitruré ou oxynitruré.

a) on porte un mélange pulvérulent de TaON et de BaO dans les proportions stoechiométriques à une température de l'ordre de 900 à 1000° C dans un tube réfractaire sous atmosphère neutre, par exemple d'azote. Après achèvement de la réaction on obtient $BaTaO_2N$ se présentant sous la forme d'une poudre de couleur marron.

b) en modifiant de façon appropriée les proportions relatives des constituants du mélange pulvérulent de départ, on obtient le même composé à partir de $Ta_3N_5$, $Ta_2O_5$ et de BaO.

**Exemple 2**

Préparation de $BaTaO_2N$ à partir de dérivés oxygénés.

L'appareillage utilisé pour cette préparation se trouve illustré schématiquement à la figure unique annexée. Sur ce schéma de montage, on remarque que l'appareillage est constitué principalement par un four électrique horizontal 1, un tube réfractaire en pythagoras 2, un débimètre 3, un barboteur contenant de l'huile de vaseline 4 et la nacelle 5 contenant le produit.

A l'une des extrémités du four 1, un robinet à trois voies permet d'introduire un gaz inerte (azote U) pour purger l'appareil après refroidissement.

Le débit d'ammoniac est contrôlé à l'entrée et à la sortie du four par l'intermédiaire du débimètre 3 et du barboteur 4.

A l'aide d'un tel appareillage, on chauffe à environ 900 à 1000°'C pendant 48 heures, sous atmosphère d'ammoniac, un mélange intime de

carbonate de baryum et d'oxyde de tantale en proportion stoechiométrique. Après réaction, on récupère un produit de couleur marron ($BaTaO_2N$).

**Exemple 3**

Préparation de $SrTaO_2N$ à partir d'un dérivé oxygéné mixte.

On prépare dans un premier stade le tantalate de strontium $Sr_2Ta_2O_7$ par chauffage, au four à moufle, à environ 1400° C, d'un mélange intime de carbonate de strontium et d'oxyde de tantale en proportions stoechiométriques.

Dans un deuxième stade, en utilisant l'appareiliage et les conditions de l'exemple 2, on obtient un composé orange $SrTaO_2N$.

**Exemple 4**

Préparation de $BaNbO_2N$ à partir de dérivés oxygénés.

En opérant comme indiqué à l'exemple 2, on obtient à partir de carbonate de baryum et d'oxyde de niobium, l'oxynitrure $BaNbO_2N$.

**Exemple 5**

Préparation de $LaTaON_2$ à partir d'un dérivé oxygéné.

Dans un premier stade, en operant comme à l'exemple 3, mais en remplaçant le carbonate de strontium par l'oxyde de lanthane on prépare le tantalate de lanthane $LaTaO_4$.

Dans un deuxième stade, en utilisant l'appareillage et les conditions de l'exemple 2, on obtient un composé de couleur marron $LaTaON_2$.

**Exemple 6**

Préparation de $LaTiO_2N$ à partir d'un dérivé oxygéné mixte.

On prépare dans un premier stade le titanate de lanthane $La_2Ti_2O_7$ par chauffage au four à moufle, à environ 1200° C, d'un mélange intime d'oxyde de lanthane et d'oxyde de titane en proportion stoechiométrique.

Dans un deuxième stade, en utilisant l'appareillage et les conditions de l'exemple 2, on obtient le composé $LaTiO_2N$.

**Exemple 7**

Préparation de $NdTaON_2$ à partir d'un dérivé oxygéné mixte.

En opérant comme indiqué à l'exemple 5, mais en remplaçant l'oxyde de lanthane par l'oxyde de néodyme, on obtient l'oxynitrure $NdTaON_2$ par action de l'ammoniac sur le tantalate $NdTaO_4$.

**Exemple 8**

Préparation de $SmTaON_2$ à partir d'un dérivé oxygéné mixte.

En opérant comme indiqué à l'exemple 5, mais en remplaçant l'oxyde de lanthane par l'oxyde de samarium, on obtient l'oxynitrure $SmTaON_2$ par action de l'ammoniac sur le tantalate $SmTaO_4$.

**Caractérisation de $BaTaO_2N$ obtenu à l'exemple 2**

a) détermination de la teneur en azote

La quantité d'azote présente dans l'échantillon analysé a été contrôlée en tenant compte d'une part de la perte de masse observée lors des réactions de nitruration, et d'autre part des analyses chimiques (dosage de l'azote).

D'une manière générale, les résultats obtenus sont globalement compatibles avec la formation de $BaTaO_2N$, laquelle a été égalament confirmée lors de la détermination structurale par diffraction neutronique.

b) étude thermogravimétrique

L'action de l'oxygène a été étudiée par thermogravimétrie dans le cas de $BaTaO_2N$. Elle débute vers 500° C. Le produit obtenu après montée en température jusqu'à 1000° C se présente sous forme d'une poudre de couleur blanche. L'analyse radiocristallographique révèle la présence d'un mélange de deux phases oxygénées: $Ba_5Ta_4O_{15}$ et $BaTa_2O_6$, mais dans le cas présent c'est la variété quadratique de $BaTa_2O_6$ (fiche ASTM 17 - 793) que l'on identifie.

A partir de l'augmentation de masse observée, on peut aussi déterminer le taux d'azote de l'oxynitrure de départ; sa valeur confirme les résultats précédemment obtenus.

c) étude magnétique

La variation de couleur observée sous atmosphère réductrice pouvait laisser craindre une diminution du degré d'oxydation de $Ta^V$ pouvant conférer aux produits un comportement paramagnétique.

Une étude magnétique effectuée selon la méthode de Faraday a donc été entreprise, afin de vérifier cette hypothèse. Aucune présence de phase paramagnétique n'a pu être decelée.

d) étude diélectrique

Les faibles pertes observées, lors de l'étude diélectrique des matériaux infirment l'hypothèse d'une éventuelle réduction du tantale. L'étude diélectrique a été conduite sur une pastille simplement recuite. Les courbes représentant les variations de la constante diélectrique ε' et de l'angle de perte tg δ en fonction de la température ont été tracées pour différents échantillons de composés de formule I. Dans tous les cas on observe que ε' reste constante dans la gamme de températures s'étendant entre 90 et 370°K pour les fréquences de 1,10 et 100 KHz. Ces résultats ont d'ailleurs été confirmés sur des pastilles de produit ayant servi de test préliminaire de frittage.

Etant donné que sur poudre, les valeurs de ε' sont relativement élevées et restent constantes et que les valeurs de tg δ restent très faibles, les valeurs correspondantes sur les céramiques frittées seront également très intéressantes.

e) analyse radiocristallographique

Le contrôle des échantillons au moyen de rayons X a été effectué systématiquement par enregistrement graphique du diagramme de poudre à l'aide d'un diffractomètre muni d'un compteur proportionnel (rayonnement monochromatique K α du cuivre: λ = 1,5445 Å et filtre de nickel).

L'examen des diagrammes obtenus révèle que les composés $ATaO_2N$ possèdent une maille cubique de type perovskite.

Le tableau I ci-après correspond au diagramme de poudre de $BaTaO_2N$ et le tableau II indique la valeur moyenne du paramètre cubique pour différentes compositions réalisées.

**Tableau I**

Diagramme de diffraction de $BaTaO_2N$

| hkl (cub.) | $d_{obs.}$(Å) | $I/I_o$ |
|---|---|---|
| 100 | 4,13 | 4 |
| 110 | 2,917 | 100 |
| 200 | 2,062 | 26 |
| 210 | 1,843 | 1 |
| 211 | 1,681 | 38 |
| 220 | 1,456 | 15 |
| 310 | 1,303 | 15 |
| 222 | 1,188 | 5 |
| 321 | 1,100 | 18 |
| 400 | 1,029 | 3 |
| 330 | 0,969 | 11 |
| 420 | 0,919 | 9 |

**Tableau II**

Valeur moyenne du paramètre cubique (Å)

**Composés perovskite**

| $BaTaO_2N$ | $BaNbO_2N$ | $SrTaO_2N$ | $LaTaON_2$ |
|---|---|---|---|
| 4,113 | 4,128 | 4,033 | 4,042 |

**Etude structurale de $BaTaO_2N$ par diffraction de neutrons**

L'examen du diagramme de diffraction X de $BaTaO_2N$ révèle une maille cubique et indique sans ambiguité que ce composé possède une structure de type perovskite.

A cause de leurs numéros atomiques voisins, il n'est pas possible de différencier oxygène et azote par diffraction des rayons X et donc de déceler un ordre éventuel entre ces deux atomes, ordre qui se traduirait par des raies de surstructure. Afin de lever cette ambiguité, on a effectué cette étude par diffraction de neutrons. En effet, les longueurs de Fermi de l'oxygène et de l'azote sont nettement différentes (bO = 0,58 x $101^{-12}$cm -bN = 0,94 x $10^{-12}$cm). Il est donc possible de les distinguer.

La méthode expérimentale utilisée est la méthode du temps de vol avec utilisation d'un chopper statistique. Parmi les avantages de cette méthode, il convient de signaler dans cette application particulière:

- la très bonne résolution qui permet de déceler une déformation de la maille, et
- la possibilité d'obtenir un spectre à basse température afin de mettre en évidence une transition ordre-désordre.

L'affinement est effectué grâce à un programme d'analyse de profil de raies de diffraction qui permet d'utiliser un grand nombre de plans réticulaires. Dans l'intervalle compris entre 3,00 et 0,54 Å, l'affinement a été mené sur 74 plans hkl indépendants.

Les différents atomes ont été placés dans les positions particulières suivantes du groupe spacial Pm3m:

| Atome | Position | x | y | z |
|---|---|---|---|---|
| Ba | 1(a) | 0 | 0 | 0 |
| Ta | 1(b) | 1/2 | 1/2 | 1/2 |
| (O,N) | 3(c) | 0 | 1/2 | 1/2 |

On a réparti de façon statistique les atomes d'oxygène et d'azote sur le site 3(c) et on a attribué comme longueur de Fermi à ce site une valeur moyenne

$$b(O,N) = \frac{2bO + 1bN}{3} = 0,70\ 10^{-12}cm$$

Comme les atomes sont tous en position

partculière, les variables à affiner sont les suivantes: quatre paramètres qui définissent le bruit de fond, le paramètre a de la maille cubique, le facteur d'échelle et les facteurs d'agitation thermique isotrope des différents atomes.

On a obtenu un minimum du facteur R sur le profil des raies égal à 0,0313 pour les valeurs suivantes (à 293° K)

a = 4,1128(1) Å
B Ba = 0,43(5) $Å^2$
B Ta = 0,49(3)
B(O,N) = 0,55(2).

Au cours de l'affinement, on a donné au coefficient fixant la longueur des raies la valeur de $6{,}5.10^{-5}$, valeur légèrement supérieure à celle qui est généralement attribuée: environ $4.10^{-5}$. Ceci est probablement dû à une cristallisation légèrement imparfaite de l'échantillon étudié.

Afin de vérifier la composition de cette phase, on a effectué des calculs supplémentaires en introduisant comme variable la proportion respective d'oxygène et d'azote dans le site 3(c). On définit une longueur de Fermi b(O,N) telle que:

$$b(O,N) = \frac{(2+x)\,bO + (1-x)\,bN}{3}$$

Après affinement la valeur de x n'est pas significativement différente de O et la valeur du facteur R est égale à celle obtenue précédemment.

Enfin, un diagramme de diffraction neutronique a été effectué à la température de l'helium liquide. Ce diagramme est directement superposable à celui enregistré à la température ordinaire. Aucune transition ordre-désordre n'a donc pu être décelée.

La présente invention s'étand également aux diverses solutions solides des composés de formule I précédemment définis, ces solutions solides pouvant être aisément obtenues en ajustant les proportions relatives des constituants du mélange pulvérulent de départ. La formule générale de telles solutions solides intermédiaires peut alors être représentée par:

$$A_{1-x}\,A'_x\,B_{1-y}\,B'_y\,O_{3-n}\,N_n$$

dans laquelle:

A et A' sont des cations de métal tel que défini à la formule I pour désigner A, et

B et B' sont des cations de métal tel que défini à la formule I à propos de B, B' pouvant en outre être constitué par tout élément susceptible d'entrer dans le site octaédrique,

$O < n \leqslant 3$ n pouvant prendre des valeurs fractionnaires

$O \leqslant x, y \leqslant 1$,

en respectant bien sûr l'équilibre des charges cationiques et des charges anioniques.

La présente invention s'étend par ailleurs à d'autres solutions solides des composés de formule générale I précédemment définis, dans lesquelles le nobre de cations A et B n'est pas limitatif.

## Revendications

1. Composés azotés ou oxyazotés à structure perovskite répondant à la formule générale I:

$$A\,B\,O_{3-n}\,N_n \qquad (I)$$

dans laquelle:
* le réseau cationique est constitué:
* par un cation de métal A choisi parmi: $Li^+$, $Na^+$, $K^+$, $Rb^+$, $Cs^+$, $Ag^+$, $Tl^+$ $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$

I le symbole Ln désignant à la fois le lanthane (La) ainsi que l'ensemble des lanthanides; et
* par un cation de métal B choisi parmi: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$;
* n = 1, 2 ou 3, et
* les charges cationiques a du métal A et b du métal B vérifient les relations:

$$a + b = 6 + n$$

$$a \geqslant n$$

ainsi que les solutions solides de ces composés.

2. Composés oxyazotés selon la revendication 1, caractérisés en ce qu'ils répondent à la formule générale Ia:

$$A\,B\,O_2\,N \qquad (Ia)$$

dans laquelle:
* le cation de métal A est choisi parmi: $li^+$, $Na^+$, $K^+$, $Rb^+$, $Cs^+$, $Ag^+$, $Tl^+$, $Ca^{2+}$, $Ba^{2+}$, $Sr^{2+}$, $Pb^{2+}$, $Cd^{2+}$ $Ln^{3+}$, $Bi^{3+}$, $Y^{3+}$, $Th^{4+}$, $U^{4+}$, trans-$U^{4+}$; et
* le cation de métal B est choisi parmi: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$,

ainsi que les solutions solides de ces composés.

3. Composés oxyazotés selon la revendication 1, caractérisés en ce qu'ils répondent à la formule générale Ib:

$$A\,B\,O\,N_2 \qquad (1b)$$

dans laquelle:
* le cation de métal A est choisi parmi: $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$. $U^{4+}$, trans-$U^{4+}$; et
* le cation de métal B est choisi parmi: $W^{6+}$, $Re^{6+}$, $Mo^{6+}$, $Ta^{5+}$, $Nb^{5+}$, $Mo^{5+}$, $W^{5+}$,

$Ti^{4+}$, $Zr^{4+}$, $Sn^{4+}$, $Ge^{4+}$, $Nb^{4+}$, $Ta^{4+}$, ainsi que les solutions solides de ces composés.

4. Composés azotés selon la revendication 1, caractérisés en ce qu'ils répondent à la formule générale Ic:

$A\,B\,N_3$ (Ic)

dans laquelle:

* le cation de métal A est choisi parmi: $Ln^{3+}$, $Bi^{3+}$, $Y^{3+}$, $Th^{4+}$, $U^{4+}$, trans-$U^{4+}$, et
* le cation de métal B est choisi parmi: $W^{6+}$, $Re^{6+}$, $Mo^{6+}$, $Ta^{5+}$, $Nb^{5+}$, $Mo^{5+}$, $W^{5+}$,

ainsi que les solutions solides de ces composés.

5. Procédé de preparation d'un composé de formule générale I selon la revendication 1, caractérisé en ce que l'on fait réagir un nitrure, un oxynitrure ou un oxyde de métal A avec un nitrure, un oxynitrure ou un oxyde de métal B.

6. Procédé selon la revendication 5, caractérisé en ce que la réaction est conduite à une température de l'ordre de 900 à 1000° C sous une atmosphère neutre, par exemple d'azote.

7. Procédé de préparation d'un composé de formule générale I selon la revendication 1, caractérisé en ce que l'on effectue un nitruration sous une atmosphère gazeuse réductrice d'un mélange constitué par un oxyde ou un précurseur d'oxyde de métal A et par un oxyde ou un précurseur d'oxyde de métal B.

8. Procédé de préparation d'un composé de formule générale I selon la revendication 1, caractérisé en ce que l'on effectue une nitruration sous une atmosphère gazeuse réductrice d'un oxyde mixte de métaux A et B, ou d'un mélange d'oxydes mixtes, issu de la combinaison préalable des constituants du mélange de la revendication 7.

9. Procédé selon la revendication 7 ou 8, caractérisé en ce que la réaction de nitruration est conduite pendant environ 48 heures à une température de l'ordre de 900 à 1000° C.

10. Procédé selon l'une des revendications 7 à 9, caractérisé en ce que l'on utilise de l'ammoniac en tant qu'agent de nitruration et de réduction.

11. Procédé selon l'une des revendications 7 à 10, caractérisé en ce que, lorsque A est un métal alcalino-terreux, le précurseur d'oxyde de métal A est choisi parmi le carbonate et l'oxalate.

12. Application des composés de formule générale I à la fabrication de composants diélectriques.

**Patentansprüche**

1. Stickstoffhaltige oder Sauerstoff-Stickstoff-haltige Verbindungen mit Perovskitstruktur, entsprechend der allgemeinen Formel I:

$A\,B\,O_{3-n}\,N_n$ (I)

worin

* das kationische Gitter gebildet ist:
* durch ein Metallkation A ausgewählt aus: $Li^{+}$, $Na^{+}$, $K^{+}$, $Rb^{+}$, $Cs^{+}$ $Ag^{+}$, $Tl^{+}$, $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$, worin das Symbol Ln gleichzeitig das Lanthan (La) sowie sämtliche Lanthaniden bezeichnet, und
* durch ein Metallkation B, ausgewählt aus: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$;
* n = 1, 2 oder 3, und
* die kationischen Ladungen a des Metalls A und b des Metalls B den Gleichungen:

$$a + b = 6 + n$$

$$a \geqslant n$$

sowie die festen Lösungen dieser Verbindungen.

2. Sauerstoff-Stickstoff-haltige Verbindungen nach Anspruch 1, dadurch gekennzeichnet, daß sie der allgemeinen Formel Ia entsprechen:

$A\,B\,O_2\,N$ (Ia)

worin:

* das Metallkation A ausgewählt ist aus: $Li^{+}$, $Na^{+}$, $K^{+}$, $Rb^{+}$, $Cs^{+}$, $Ag^{+}$, $Tl^{+}$, $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$; und
* das Metallkation B ausgewählt ist aus: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$,

sowie die festen Lösungen dieser Verbindungen.

3. Sauerstoff-Stickstoff-haltige Verbindungen nach Anspruch 1; dadurch gekennzeichnet, daß sie der allgemeinen Formel Ib entsprechen:

$A\,B\,O\,N_2$ (Ib)

worin:

* das Metallkation A ausgewählt ist aus: $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$; und
* das Metallkation B ausgewählt ist aus: $W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$,

sowie die festen Lösungen dieser Verbindungen.

4. Stickstoffhaltige Verbindungen nach Anspruch 1, dadurch gekennzeichnet, daß sie der allgemeinen Formal Ic entsprechen:

$A\,B\,N_3$ (Ic)

worin:

* das Metallkation A ausgewählt ist aus: $Ln^{3+}$, $Bi^{3+}$, $Y^{3+}$, $Th^{4+}$, $U^{4+}$, trans-$U^{4+}$, und
* das Metallkation B ausgewählt ist aus: $W^{6+}$, $Re^{6+}$, $Mo^{6+}$, $Ta^{5+}$, $Nb^{5+}$, $Mo^{5+}$, $W^{5+}$,

sowie die festen Lösungen dieser Verbindungen.

5. Verfahren zur Herstellung einer Verbindung der allgemeinen Formel I nach Anspruch 1, dadurch gekennzeichnet, daß man ein Nitrid, ein

Oxynitrid oder ein Oxid des Metalls A mit einem Nitrid, einem Oxynitrid oder einem Oxid des Metalls B umsetzt.

6. Verfahren nach Anspruch 5, dadurch gekennzeichnet, daß die Reaktion bei einer Temperatur in der Größenordnung von 900 bis 1000° C unter einer neutralen Atmosphäre, beispielsweise Stickstoff, durchgeführt wird.

7. Verfahren zur Herstellung einer Verbindung der allgemeinen Formel I nach Anspruch 1, dadurch gekennzeichnet, daß man eine Nitridbildung unter einer reduzierenden Gasatmosphäre von einem Gemisch durchführt, das durch ein Oxid oder einen Oxidvorläufer des Metalls A und durch ein Oxid oder einen Oxidvorläufer des Metalls B gebildet wird.

8. Verfahren zur Herstellung einer Verbindung der allgemeinen Formel I nach Anspruch 1, dadurch gekennzeichnet, daß man eine Nitridbildung unter einer reduzierenden Gasatmosphäre von einem gemischten Oxid der Metalle A und B oder von einem Gemisch von Mischoxiden, die von einer vorhergehenden Kombination der Bestandteile des Gemischs nach Anspruch 7 stammen, durchführt.

9. Verfahren nach Anspruch 7 oder 8, dadurch gekennzeichnet, daß die Nitridbildungsreaktion während etwa 48 Stunden bei einer Temperatur in der Größenordnung von 900 bis 1000° C durchgeführt wird.

10. Verfahren nach einem der Ansprüche 7 bis 9, dadurch gekennzeichnet, daß man Ammoniak als Nitridbildungs- und Reduktionsmittel verwendet.

11. Verfahren nach einem der Ansprüche 7 bis 10, dadurch gekennzeichnet, daß, falls A ein Erdalkalimetall ist, der Oxidvorläufer des Metalls A aus dem Carbonat und Oxalat ausgewählt wird.

12. Verwendung der Verbindungen der allgemeinen Formel I bei der Herstellung von dielektrischen Elementen.

**Claims**

1. A nitrogen or oxynitrogen compound of perovskite structure, corresponding to the general formula I:

$$ABO_{3-n}N_n \qquad (I)$$

in which:

* the cationic lattice consists of: * a metal cation A chosen from the group comprising:
$Li^+$, $Na^+$, $K^+$, $Rb^+$, $Cs^+$, $Ag^+$, $Tl^+$, $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$, Ln symbole meaning lanthane (La) and the whole lanthanides group; and
* a metal cation B chosen from the group comprising:
$W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$ $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$;
* n = 1, 2 or 3, and
* the cationic charges a of the metal A and b of the metal B satisfy the equations:

$$a + b = 6 + n$$
$$a \geqslant n,$$

and the solid solutions of these compounds.

2. An oxynitrogen compound as claimed in claim 1, which corresponds to the general formula Ia:

$$ABO_2N \qquad (Ia)$$

in which:

* the metal cation A is chosen from the group comprising:
$Li^+$, $Na^+$, $K^+$, $Rb^+$, $Cs^+$, $Ag^+$, $Tl^+$, $Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$; and
* the metal cation B is chosen from the group comprising:
$W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$, $Al^{3+}$, $Ga^{3+}$, $In^{3+}$, $Tl^{3+}$, $Fe^{3+}$, $Cr^{3+}$,

and the solid solutions of these compounds.

3. An oxynitrogen compound as claimed in claim 1, which corresponds to the general formula Ib:

$$ABON_2 \qquad (Ib)$$

in which:

* the metal cation A is chosen from the group comprising:
$Ca^{2+}$, $Ba^{2+}$, $Sr^{2+}$, $Pb^{2+}$, $Cd^{2+}$, $Ln^{3+}$, $Bi^{3+}$, $Y^{3+}$, $Th^{4+}$, $U^{4+}$, trans-$U^{4+}$; and
* the metal cation B is chosen from the group comprising:
$W^{6+}$, $Re^{6+}$, $Mo^{6+}$, $Ta^{5+}$, $Nb^{5+}$, $Mo^{5+}$, $W^{5+}$, $Ti^{4+}$, $Zr^{4+}$, $Sn^{4+}$, $Ge^{4+}$, $Nb^{4+}$, $Ta^{4+}$,

and the solid solutions of these compounds.

4. A nitrogen compound as claimed in claim 1, which corresponds to the general formula Ic:

$$ABN_3 \qquad (Ic)$$

in which:

* the metal cation A is chosen from the group comprising:
$Ln^{3+}$, $Bi^{3+}$, $Y^{3+}$, $Th^{4+}$, $U^{4+}$, trans-$U^{4+}$; and
* the metal cation B is chosen from the group comprising:
$W^{6+}$, $Re^{6+}$, $Mo^{6+}$, $Ta^{5+}$, $Nb^{5+}$, $Mo^{5+}$, $W^{5+}$,

and the solid solutions of these compounds.

5. A process for the preparation of a compound of the general formula I as claimed in claim 1, which comprises reacting a nitride, an oxynitride or an oxide of the metal A with a nitride, an oxynitride or an oxide of the metal B.

6. The process as claimed in claim 5, wherein the reaction is carried out at a temperature of the order of 900 to 1000° C under an inert atmosphere, for example a nitrogen atmosphere.

7. A process for the preparation of a compound

of the general formula I as claimed in claim 1, which comprises subjecting a mixture consisting of an oxide or an oxide precursor of the metal A and an oxide or an oxide precursor of the metal B to a nitridation under an atmosphere of reducing gas.

8. A process for the preparation of a compound of the general formula I as claimed in claim 1, which comprises subjecting a mixed oxide of the metals A and B, or a mixture of mixed oxides, derived from the prior combination of the constituents of the mixture of claim 7, to a nitridation under an atmosphere of reducing gas.

9. The process as claimed in claim 7 or 8, wherein the nitridation reaction is carried out for about 48 hours at a temperature of the order of 900 to 1000°C.

10. The process as claimed in claim 7 or 8 wherein ammonia gas is used as the nitriding and reducing agent.

11. The process as claimed in claim 7 or 8, wherein, if A is an alkaline earth metal, the oxide precursor of the metal A is chosen from the group comprising the carbonate and the oxalate.

12. Application of the compounds of the general formula I to the manufacture of dielectric components.

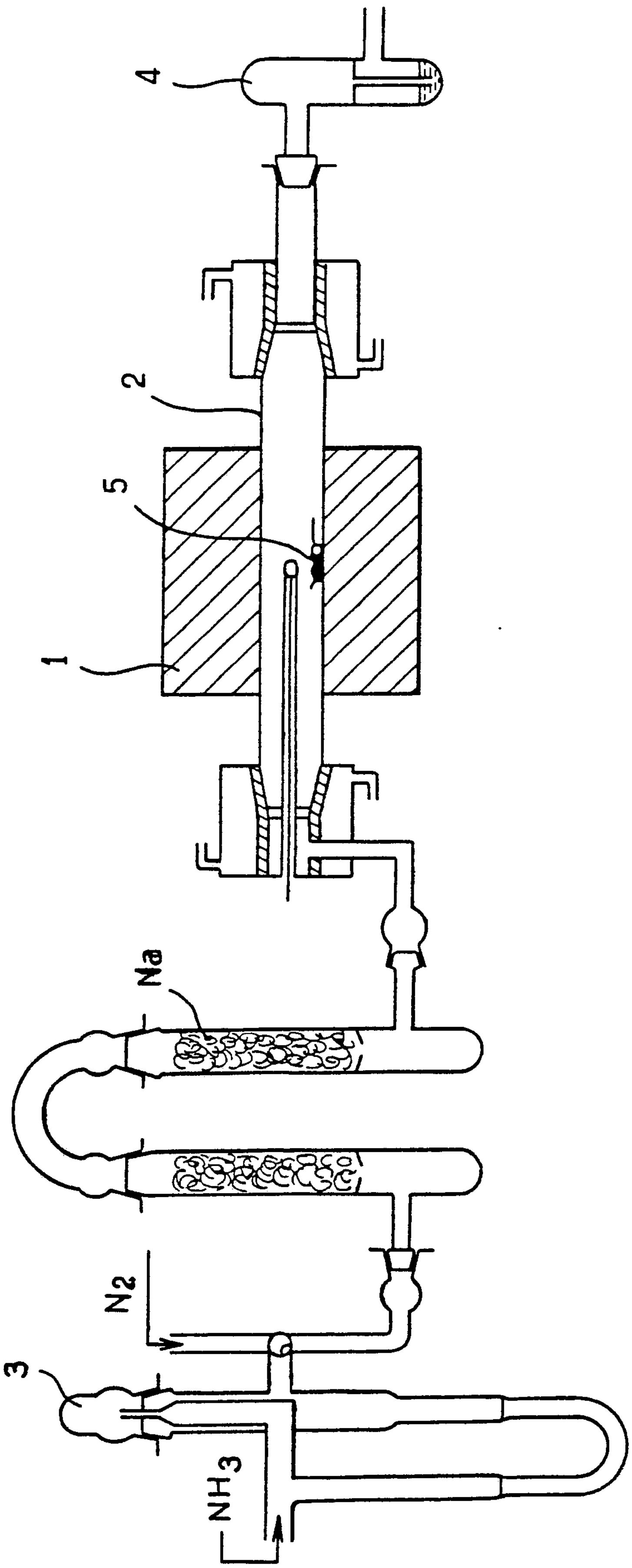
4
2
5
1
Na
$N_2$
3
$NH_3$